# EUROPÄISCHE PATENTSCHRIFT

(11) **EP 4 129 783 B1**
(45) Veröffentlichungstag und Bekanntmachung des Hinweises auf die Patenterteilung: **22.05.2024**
(21) Anmeldenummer: 22184243.8
(22) Anmeldetag: 16.03.2016
(51) Int. Cl.: B60T 13/68, B60T 8/40, B60T 13/74

(54) **DRUCKERZEUGUNGSEINRICHTUNG UND BETÄTIGUNGSVERFAHREN MIT ELEKTRISCH ANGETRIEBENEM DOPPELHUBKOLBEN**
PRESSURE GENERATING DEVICE AND OPERATING METHOD COMPRISING AN ELECTRICALLY DRIVEN DUAL-ACTION RECIPROCATING PISTON
DISPOSITIF DE GÉNÉRATION DE PRESSION ET PROCÉDÉ D'ACTIONNEMENT À PISTON À DOUBLE EFFET A COMMANDE ÉLECTRIQUE

(30) Priorität: 16.03.2015 DE 202015107072 U; 16.03.2015 DE 202015107075 U; 16.03.2015 DE 202015107079 U; 21.04.2015 DE 202015107081 U; 30.12.2015 DE 202015008975 U; 30.12.2015 DE 202015008976 U
(43) Veröffentlichungstag der Anmeldung: 08.02.2023
(62) Teilanmeldung aus: 16711220.0
(73) Patentinhaber: IPGate AG, 8808 Pfäffikon (CH)
(72) Erfinder: LEIBER, Heinz, 71739 Oberriexingen (DE); LEIBER, Thomas, 22203 Rogoznica (HR); KÖGLSPERGER, Christian, 82538 Geretsried (DE)
(74) Vertreter: Meissner Bolte Partnerschaft mbB

(56) Entgegenhaltungen:
- WO-A2-03/038246
- DE-A1-102009 043 484
- US-A1- 2012 061 192

## Beschreibung

Die Erfindung betrifft eine Druckerzeugungseinrichtung mit den Merkmalen des Oberbegriffs des Patentanspruches 1.

### Stand der Technik

Aus DE 10 2014 224 201 A1 sind Kupplungsaktoren bekannt, die zur Betätigung einer Reibungskupplung über einen Geberzylinder und Nehmerzylinder über eine Hydraulikleitung miteinander verbunden sind, wobei der Geberzylinder über einen Elektromotor und ein Getriebe betätigt wird. Derartige Betätigungsansätze sind bei Einfachkupplungsbetätigungen, z.B. E-Kupplungen, sinnvoll, bei Doppelkupplungen wird je Betätigungssystem je ein System für die individuelle Betätigung benötigt. Dadurch sind die Kosten für Doppelkupplungssysteme annähernd doppelt so hoch wie bei E-Kupplungen. Zudem kommen Kosten für die Betätigung von weiteren hydraulischen Verbrauchern hinzu.

In DE 10 2006 038 446A1 ist ein Doppelkupplungsbetätigungssystem mit Magnetventilen beschrieben, in dem über einen oder zwei elektromotorische Kolbenantriebe sowohl Kupplungen als auch Gangsteller betätigt werden. Da ein Gangsteller nicht gleichzeitig mit der Kupplung bestätigt werden kann, ist dieser Ansatz in Hinblick auf Kostenreduzierung sinnvoller als der Einsatz von Kupplungsaktuatoren und hydraulische oder elektromechanische Gangsteller. Die Betätigung von zwei Kupplungen mit einem Aktuator ist jedoch sehr aufwändig umsetzbar, da gleichzeitig im Schaltvorgang zwei Kupplungen betätigt werden. Dies ist mit einem Steller über eine entsprechende Ventilschaltung sehr schwierig realisierbar.

In WO 2015/036623 A2 ist eine elektrisch angetriebene Druckregel- und Volumenfördereinheit mit Doppelhubkolben beschrieben, mit der Druck über die Kolben-Weg-steuerung auf- und abgebaut werden kann, wobei ein Umschaltventil vorgesehen ist, mit der die beiden Arbeitskammern des Doppelhubkolbens miteinander verbunden werden können mit dem Zweck der Reduzierung der hydraulisch wirksamen Fläche und somit Drehmomentreduzierung des Antriebsmotors.

DE 10 2009 043484 A1 offenbart ein Bremssystem für ein Fahrzeug mit einer Speicherkammer in Form eines Fluidspeichers, wobei die Speicherkammer über ein schaltbares Speicherventil mit dem Bremskreis bzw. der Druckleitung zur Radbremse verbindbar ist und das Fluid aus dem Bremskreis bzw. der Druckleitung in die Speicherkammer abfließen kann.

### Aufgabe der Erfindung

Aufgabe der Erfindung ist es, eine elektrisch angetriebene Stellaktuatorik zu schaffen, mit der mehrere Hydraulikverbraucher, insbesondere Nehmerzylinder, z.B. in Form von Kupplungen, Gangsteller, hydraulisch betätigte Zylinder mit einer oder zwei hydraulischen Druckkammern, Kolben für elektrohydraulischen Ventiltrieb oder Lenkungen, mit wenigen Schaltventilen bedient werden können und zugleich eine präzise Druckregelung umgesetzt werden kann.

### Lösung der Aufgabe

Die Aufgabe der Erfindung wird mit einer Druckerzeugungseinrichtung mit den Merkmalen des Patentanspruchs 1 gelöst.

Mit der erfindungsgemäßen Druckerzeugungseinrichtung wird eine über einen Linearaktuator oder eine Motor-Getriebe-Einheit elektrisch angetriebene Hydraulikkolbensteller basierend auf Doppelhubkolbenprinzip mit zwei hydraulischen Kammern geschaffen, der bedarfsgerecht sehr präzise in mehreren Verbrauchern gemeinsam Druck aufbauen und abbauen sowie gleichzeitig unter Nutzung der gespeicherten Energie Volumens Druck in einem Verbraucher abbauen und in einem anderen Verbraucher aufbauen kann. Auch kann das Volumen einer Kammer eines Doppelkammer-Verbrauchers (z.B. Lenkung, Gangsteller) über die Druckerzeugereinrichtung in die zweite Kammer des Doppelkammer-Verbrauchers über die Druckerzeugereinheit geregelt verschoben werden. Die Druckregelung erfolgt dabei über Druckvolumensteuerung durch den Kolben und/oder über Druckregelung unter Nutzung von Druckgebern.

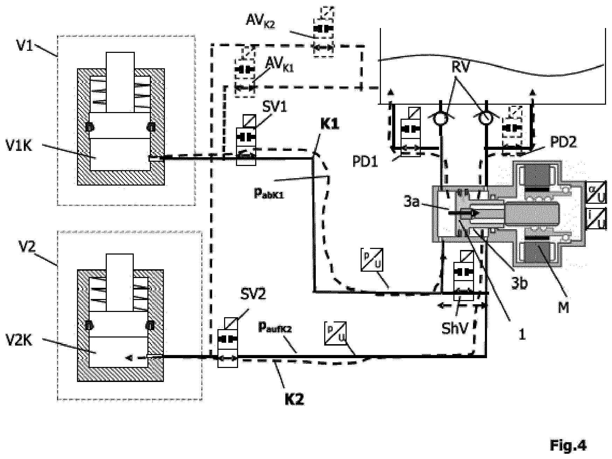

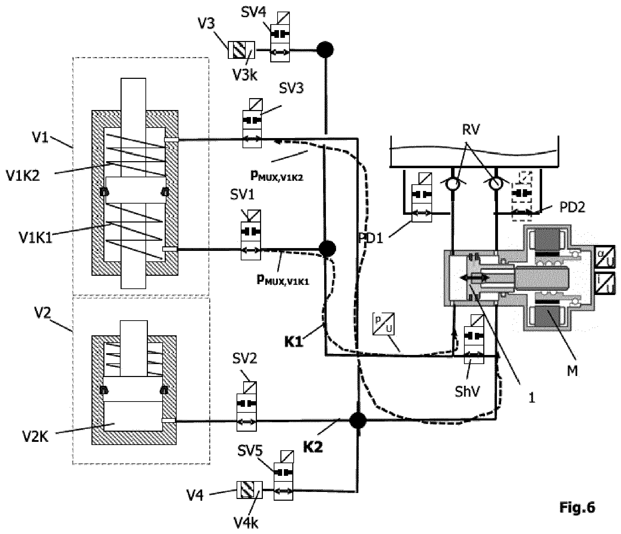

So kann mit der Druckerzeugungseinrichtung Druck in einem Hydrauliknehmerkolben, z.B. einem Kupplungssteller, aufgebaut werden, während in dem anderen Kupplungssteller gleichzeitig Druck abgebaut wird, wobei der gespeicherte Druck zumindest zum Teil zur Entlastung der Leistungsanforderung für den Stellantrieb genutzt wird, insbesondere bei dynamischen Stellvorgängen. So kann auch die Stellposition z.B. einer Stange einer Lenkung bzw. eines Gangstellers über die Druckregelung über den Doppelhubkolben sehr präzise verstellt werden, annähernd vergleichbar mit einer elektromechanischen Betätigung. Dies kann in beiden Hubrichtungen (Vor- und Rückhub des Doppelhubkolbens) erreicht werden. Dieser Aufbau ist insbesondere zur Steuerung eines Doppelkupplungsgetriebes geeignet, in dem gleichzeitig eine Kupplung gelöst wird, während die andere betätigt wird (Fig.4) bzw. eine Kolben in beide Seiten verstellt werden (Fig.6).

Eine mögliche Ausführungsform der Erfindung zeichnet sich dadurch aus, dass jeder Arbeitsraum der Kolben-Zylinder-Einheit der Druckerzeugungseinheit mittels einer Hydraulikleitung mit einem Vorratsbehältnis für ein Hydraulikmedium in Verbindung ist, wobei in jeder Hydraulikleitung zumindest einer Arbeitskammer des Doppelhubkolbens mindestens ein Schaltventil zum wahlweisen Absperren oder Öffnen der Hydraulikleitung angeordnet ist. Durch diese erfindungsgemäße Ausbildung kann der Druck in jedem Hydraulikreis über den jeweils mit dem Hydraulikkreis verbundenen Arbeitsraum und das geöffnete Schaltventil in das Vorratsbehältnis abgebaut werden. Dabei kann der Druck im jeweiligen Hydraulikkreis basierend auf der Druckmessung im jeweiligen Hydraulikkreis abgebaut werden. Durch zusätzliche Verwendung der Hubsteuerung des Kolbens des Doppelhubkolbens auf Basis der Druck-Volumen-Kennlinie(n) ist es auch möglich, dass durch Öffnen eines Schaltventils für eine vorbestimmte bzw. berechnete Dauer, der Druck in dem jeweiligen Hydraulikkreis und dem bzw. den daran angeschlossenen Verbraucher(n) verändert wird. Da jedem Verbraucher ein zusätzliches Schaltventil zugeordnet ist, mit dem der Verbraucher von seinem Hydraulikkreis getrennt werden kann, kann der Druck auch in weniger als allen Verbrauchern eines Hydraulikkreises abgebaut bzw. aufgebaut werden. Bei dieser Ausführungsform ist es zudem möglich, dass durch das Verstellen des Kolbens der Arbeitsraum so vergrößert wird, dass der Druck im jeweils angeschlossenen Hydraulikkreis wie vorgegebenen reduziert wird. Man spricht hierbei von einer Volumensteuerung. Um den Druck noch schneller im Hydraulikkreis und dem angeschlossenen Verbraucher(n) abzubauen, ist es selbstverständlich auch möglich, dass bei geöffnetem Schaltventil in der Hydraulikleitung zum Vorratsbehälter gleichzeitig der Arbeitsraum durch das Verstellen des Kolbens vergrößert wird. Hierdurch erhöht sich die Dynamik der Druckerzeugungseinheit erheblich.

In einer anderen Ausführungsform sind die Druckräume und/oder die hydraulischen Leitungen, welche von den Arbeitsräumen hin zu den Verbrauchern führen über eine Verbindungsleitung miteinander verbunden, wobei in der Verbindungsleitung ein Schaltventil zum wahlweise Öffnen oder Zusperren der Verbindungsleitung angeordnet ist. Bei dieser Ausführungsform muss nur ein Arbeitsraum der Kolben-Zylinder-Einheit der Druckerzeugungseinheit mittels einer Hydraulikleitung mit dem Vorratsbehältnis in Verbindung sein, wobei in der Hydraulikleitung ein Schaltventil zum wahlweisen Absperren oder Öffnen der jeweiligen Hydraulikleitung angeordnet ist. Es ist jedoch zur Erhöhung der Flexibilität der Druckerzeugungseinrichtung von Vorteil, wenn beide Arbeitsräume mit getrennten Hydraulikleitungen mit dem Vorratsbehälter verbunden sind, wobei in jeder Hydraulikleitung ein Schaltventil zum wahlweisen Öffnen oder absperren der Hydraulikleitung angeordnet ist.

Die Druckregelung kann bei den vorbeschriebenen Ausführungsformen allein durch Druckregelung mittels Kolbenverstellung des Doppelhubkolbens realisiert werden (Volumensteuerung). Ergänzend kann durch Ventilansteuerung des in der Verbindungsleitung angeordneten Schaltventils, sowie des bzw. der in den Hydraulikleitungen zum Vorratsbehälter angeordneten Schaltventilen der Druckauf und der Druckabbau gezielt gesteuert werden.

Zudem kann der Druckabbau alternativ allein durch Öffnen der Ventile zum Vorratsbehälter erfolgen, wobei dann der Druckabbau allein durch den jeweiligen Arbeitsraum der Kolben-Zylinder-Einheit erfolgt. Für eine präzise Druckregelung kann zudem ein Druckgeber genutzt werden, insbesondere für den Druckabbau aus den Nehmerzylindern der hydraulischen Verbraucher. Die Ventile zwischen den Arbeitsräumen (ShV) und dem Vorratsbehälter (PD1, PD2) ersetzen quasi die aus Bremssystemen bekannten Auslassventile und können somit auch als Druckabbauventile bezeichnet werden. Dadurch, dass der Druckabbau erfindungsgemäß über die Hydraulikleitungen erfolgt, die mittels eines Drucksensors überwacht werden, ist vorteilhaft ein druckgeregelter Druckabbau über die Druckabbauventile möglich. Dieser Druckabbau hat erhebliche Vorteile in Vergleich zu klassischen Auslassventilen, die zeitgesteuert betrieben werden, da dort dem jeweiligen Verbraucher ein Schaltventil vorgeschaltet ist und keine Druckinformation während des Druckabbaus vorhanden ist. Funktional kann auf die Druckgeber zur Regelung verzichtet werden, in dem der Druck über die Phasenstrommessung des elektrischen Antriebes über die Drehmomentkonstante kt berechnet wird. Durch eine Temperaturüberwachung des Motors und Berechnung der Temperatur der Permanentmagnete des Elektromotors bzw. Linearmotors, der den Doppelhubkolben antreibt, kann die Veränderung der Drehmomentkonstante über Temperatur, die typischerweise <10% ist, kann die Drehmoment weiter verfeinert werden. Über die Flächen kann der Druck beim Linearmotor direkt berechnet werden, beim Motor-Getriebe-Antrieb muss der Wirkungsgrad des Getriebes zusätzlich berücksichtigt werden, was insbesondere bei Kugelgewindetrieben sehr hoch ist und einer geringen Schwankung unterliegt. Der Einsatz eines Druckgebers in einem Hydraulikkreis ist jedoch zum Abgleich der Druck-Volumen-Kennlinie und Kalibrierung der Druckberechnung sinnvoll. Zudem wird die Ausfallsicherheit erhöht. Alternativ können auch redundante Strommesssensoren eingesetzt werden.

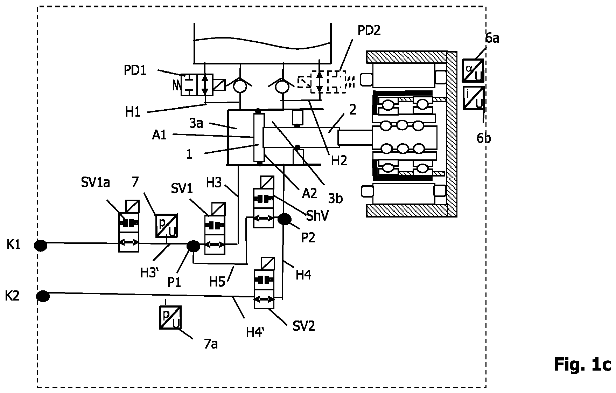

Werden zusätzlich Schaltventile an den Ausgängen des Doppelhubkolbens eingesetzt, wie dies in Figur 1c dargestellt ist, ergeben sich vorteilhaft zusätzliche Freiheitsgrade für die Druckregelung. Auch nur mit einem Druckabbauventil können annähernd alle Freiheitsgrade des Druckaufbaus und Druckabbaus, insbesondere individueller Druckaufbau und Druckabbau in jedem Kreis, gleichzeitiger Druckaufbau und Druckabbau beider Kreise, realisiert werden. Zudem kann der Motor nach der Verstellung des Kolbens entlastet werden, in dem der in einem Verbraucher gespeicherte Druck durch Schließen des Schaltventils eingeschlossen wird.

Zusätzlich kann die Wirkfläche des Kolbens der Kolben-Zylinder-Einheit zwischen vorderer und hinterer Kammer derart unterschiedlich gestaltet werden, dass der Druckvolumenbedarf für die Betätigung eines oder mehrerer Verbraucher derart angepasst wird, dass mit einem Verstellhub in Vor- oder Rückhubrichtung ein Verbraucher komplett auf 1 bar reduziert wird und die andere mit dem normalen Arbeitsdruck beaufschlagt wird, d.h. der Volumenbedarf bei der Betätigung von unterschiedlichen Nehmerkolben der Verbraucher wird durch die Flächenverhältnisse ausgeglichen, so dass der Vorhub- und Rückhubstellweg näherungsweise gleich ist.

Zudem können die unterschiedlich großen Wirkflächen der beiden Kammern des Doppelhubkolbens dahingehend genutzt werden, dass der Druckabbau im System über die Hubbewegung des Kolbens realisiert wird, ohne dass aus den Kammern der Kolben-Zylinder-Einheit Volumen an den Vorratsbehälter abgelassen werden muss. Damit kann die gespeicherte Energie vollständig genutzt werden (Feder-Masse-Schwinger-Prinzip). Für die Druckregelung und die Volumenbalance zwischen beiden Hydraulikkreisen wird dann primär das Verbindungsventil zwischen beiden Kreisen genutzt. Bei Veränderungen der Druckvolumenkennlinie, z.B. bei Dampfgasbildung, kommt es zu einer Veränderung der Volumenbilanz. In diesem Fall wird die Asymmetrie durch Nachfördern aus dem Vorratsbehälter bzw. Druckablass in den Vorratsbehälter ausgeglichen. Die gilt auch für den Fall, wenn ein bestimmter zeitlicher Druckverlauf gefordert ist. In diesem Fall sind beide Druckabbauventile erforderlich.

Die Umschaltung bzw. Wirkweise unterschiedlich großer hydraulischer Flächen, insbesondere zur Druckregelung beim Druckaufbau und Druckabbau, kann durch eine Verbindung der Vorder- und Rückseite des Doppelhubkolbens über ein oder mehrere Schaltventile in der Verbindungsleitung mit großen Durchflussquerschnitten sowie eine direkte Verbindung der Vorder- und Rückseite über eine kurze strömungsarme hydraulische Verbindungsleitung ermöglicht werden, die im Bereich des Endhubes des Doppelhubkolbens der einen Kammer mit dem Anfangshub des Doppelhubkolbens der zweiten Kammer verbindet. Die Verbindungslänge ist damit näherungsweise so groß wie der gesamte Hub des Doppelhubkolbens. Für eine strömungsarme Gestaltung sind der Zylinder der Kolben-Zylinder-Einheit sowie die Verbindungsleitungsinnvollerweise Teil eines Hydraulikblockes. Die Schaltventile sind vorzugsweise ebenfalls im Hydraulikblock angeordnet. Neben dem Schaltventil in der Verbindungsleitung kann auch das mindestens ein Druckabbauventil in dem Hydraulikblock angeordnet sein.

Des Weiteren ist im Sinne der Optimierung (Downsizing des Linearaktuators) die Wahl der Querschnittsflächen zwischen Vorder- und Rückseite des Doppelhubkolbens entscheidend. Ein Verhältnis der Wirkflächen zwischen Vorderseite und Rückseite des Doppelhubkolbens im Verhältnis 1,5 bis 2,5, vorzugsweise 2, ist dabei zu wählen, um ein effektives Downsizing zu erreichen. Bei einem Flächenverhältnis von 2:1 (Vordere Fläche A1/ hintere Fläche A2) kann beim Öffnen des Verbindungsventil ShV zwischen den beiden Arbeitskammern sowohl beim Vorhub auch auch beim Rückhub die hydraulisch wirksame Fläche auf den Stellmotor halbiert werden, da im Vorhub A1-A2 im Rückhub A2 wirkt. Dadurch kann das Drehmoment des Antriebsmotors halbiert werden und die Axialkraft auf das Getriebe wird halbiert. Dies ermöglicht neben der Kostenreduzierung des Motors auch ein Einsatz eines kostengünstigen Trapezspindeltriebes für die Umwandlung des Drehmoments in eine translatorische Kraft.

Ferner wird eine genaue Drucksteuerung über Wegsteuerung eines Linearaktuators sowohl beim Druckaufbau als auch optional beim Druckabbau funktional umgesetzt. Dazu wird eine Druck-Volumen(Weg)-Kennlinie über einen Drucksensor als Modell abgebildet und zur Steuerung verwendet.

Alternativ zum Linearaktuator kann der Doppelhubkolben auch über eine Motor-Getriebe-Lösung betätigt werden. In diesem nicht näher ausgeführten Fall ist ein Getriebe zwischen Motor und Doppelkolbenzugstange angeordnet, die auch eine rechtwinklige Anordnung des Doppelhubkolbens relativ zum Motor ermöglicht.

Die erfindungsgemäße Einrichtung ermöglicht, dass z.B. neben einer angeschlossenen Kupplung eine oder mehrere hydraulische Verbraucher, wie z.B. Gangsteller, mit hoher Effizienz mit Druck und Volumen versorgt werden können, wobei gleichzeitig eine genaue Regelung der Verbraucher gewährleistet ist. Primäre Anwendung sind Gangsteller eines Doppelkupplungsgetriebes in Ergänzung zur Kupplungsbetätigung.

Vorteilhafte Ausführungen bzw. Weiterbildungen der Erfindung ergeben sich durch die Merkmale der Unteransprüche.

Mit der erfindungsgemäßen Lösung bzw. ihren Ausführungsformen und Weiterbildungen können mit anderen Worten unter anderem folgende Funktionen realisiert bzw. zusammenfassend folgende Vorteile erzielt werden:
- Gleichzeitiger Druckaufbau in einem Hydraulikkreis und Druckaufbau im anderen zweiten Hydraulikkreis mit Nutzung der hydraulisch gespeicherten Energie in einem Nehmerkolben zur Entlastung der Leistungsanforderung der DHK-Druckkolbeneinheit (Feder-Masse-Prinzip);
- Gleichzeitiger Druckabbau und Druckaufbau in je einer Kammer eines Verbrauchers mit zwei hydraulischen Kammern zur Positionsregelung eines Stellers (z.B. Lenkung, Gangsteller)
- genaue Druckregelung durch Wegsteuerung statt Druckregelung über den Druck-Volumen/Weg-Zusammenhang sowohl im Druckaufbau als auch Druckabbau über den Doppelhubkolben;
- genaue Druckabbausteuerung bzw. Regelung über Doppelhubkolbenkammer und Druckabbauventil(en) unter Nutzung der Druckinformation in den Hydraulikkreisen;
- viele Freiheitsgrade der genauen Druckregelung (individueller Druckaufbau und Druckabbau in einem Kreis K1 oder mehreren Kreisen K1+K2;
- bedarfsgerechte energieeffiziente Druckerzeugung (Pressure-on-Demand) und Stromentlastung des Antriebes durch Nutzung von Schaltventilen zum Halten des eingesperrten Druckes;
- Versorgung von mehreren hydraulischen Verbrauchern, wie z.B. Kupplungen, Gangsteller, im Multiplexbetrieb (d.h. primär sequentielle oder teilsimultaner Druckregelung in mehreren Verbrauchern über Druckvolumensteuerung durch Doppelhubkolben) durch Zu- und Abschalten der Verbraucher durch magnetische Schaltventile in den jeweiligen Zuleitungen;
- sehr kompakte, kostengünstige Druckvolumen und Fördereinheit durch Downsizing des Motors/ Getriebes über Reduzierung der- Kraft bzw. des Drehmomentes des Elektromotors über zwei schaltbare hydraulische Querschnittsflächen über ein Verbindungsventil (ShV); somit Einsatz von kleineren Motoren und kostengünstigeren Trapezspindeln, die im Motor integriert sind.
- sehr hohe Freiheitsgrade bei Optimierung von hydraulischen Systemen (Wegfall aufwändiger Druckabbauregelverfahren, Drucksensoren mehrerer Stellmotoren, Anschluss von mehreren Verbrauchern an eine elektrisch bestätigte Hydraulikquelle).

Durch die Freiheitsgrade und genaue Druckregelung können Ventilschaltungen von Verbrauchern vereinfacht werden, z.B. Ersatz aufwändiger Proportionalventile durch einfache Magnetventile. Zudem kann der Linearantrieb der Kolben-Zylinder-Einheit der Druckerzeugungseinrichtung durch die schaltbaren Wirkflächen signifikant vereinfacht werden und die Freiheitsgrade können dahingehend genutzt werden, dass eine Vielzahl von Verbrauchern an die Druckerzeugungseinrichtung angeschlossen werden. Eine Redundanz kann dadurch geschaffen werden, in dem der Antriebsmotor mit einer redundanten 6-Phasenwicklung und einer redundanten Ansteuerung vorgesehen wird und bei Ausfall eines Hydraulikkreises der zweite Hydraulikkreis noch genutzt werden kann.

### Fiaurenbeschreibuna

Verschiedene mögliche Ausführungsformen der erfindungsgemäßen Druckerzeugungseinrichtung werden nachfolgend anhand von Zeichnungen näher erläutert.

Es zeigen:
- **Fig. 1a**: Grundaufbau einer Druckerzeugungseinrichtung mit Doppelhubkolben, nachfolgend auch DHK-Druckregeleinheit genannt, mit Motor-Getriebeeinheit für die Druckversorgung von zwei Hydraulikkreisen mit Druckabbauventilen;
- **Fig. 1b:**: Grundaufbau der DHK-Druckregeleinheit mit Motor-Getriebeeinheit für die Druckversorgung von zwei Hydraulikkreisen mit Druckabbauventilen und Shifting-Ventil;
- **Fig. 1c:**: Grundaufbau der DHK-Druckregeleinheit mit Motor-Getriebeeinheit für die Druckversorgung von zwei Hydraulikkreisen mit einem, alternativ zwei Druckabbauventilen sowie Schaltventilen in den Hydraulikkreisen für weitere Freiheitsgrade in der Druckregelung;
- **Fig. 2:**: Grundaufbau der Druckerzeugungseinrichtung mit Linearantrieb ohne Getriebe;
- **Fig. 3a:**: Druckregelverfahren unter Berücksichtigung der schaltbaren Flächen;
- **Fig. 3b:**: Druckregelverfahren bei der Kupplungsbetätigung mit unterschiedlichen Verbrauchers bzw. hydraulische wirksamen Querschnittsflächen;
- **Fig. 4:**: Einsatz der Druckerzeugungseinrichtung als Kolbensteller für zwei hydraulische Verbraucher (insbesondere Kupplungen) mit zusätzlichem Einsatz von ShV-Ventil und Schaltventilen an den Verbrauchern für Multiplexbetrieb;
- **Fig. 4a:**: Alternative Ausführungsform, bei der der Druckabbau in den Kammern der Verbraucher über zugeordnete Auslassventile erfolgt bzw. erfolgen kann;
- **Fig. 5:**: Einsatz der Druckerzeugungseinrichtung als Kolbenstellersteller sowie Schaltsteller für mehr als 2 Verbraucher (insbesondere 2 Kupplungen und zwei Schaltsteller mit Druckregelung der Kupplung und der Schaltsteller im Multiplexverfahren);
- **Fig. 6:**: Einsatz der Druckregeleinheit als Kupplungssteller undSchaltsteller für Verbraucher mit zwei hydraulischen Wirkflächen (z.B. Gangsteller, Lenkung) sowie optional weiterer Verbraucher mit Multiplexbetrieb

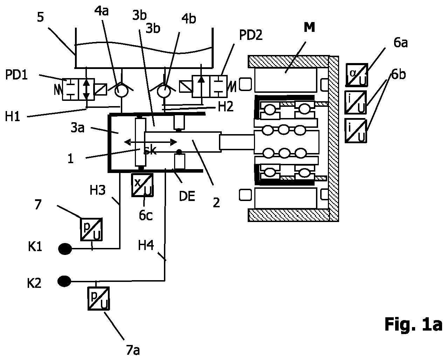

**Fig.1a** zeigt den Grundaufbau einer ersten möglichen Ausführungsform der erfindungsgemäßen Druckerzeugungseinrichtung, welche auch als Druckregel- und Volumenfördereinheit, nachfolgend auch DHK-Druckregeleinheit, bezeichnet werden kann. Diese weist einen beidseitig wirkenden Kolben 1, nachfolgend auch Doppelhubkolben DHK genannt, der über eine Druckstange 2 mit einem Linearantrieb, bestehend aus Elektromotor M und Getriebe, welches insbesondere ein Kugelgewindegetriebe ist, in beide Richtungen über den Weg sk verschoben werden kann. Am Stellmotor M sind Winkelgeber 6a und Phasenstrommesssensor(en) 6b vorgesehen. Alternativ zum Winkelgeber kann ein Sensor direkt zur Bestimmung der Kolbenhubposition (6c) eingesetzt werden. Dies ist insbesondere bei Schlupf im Getriebe hilfreich zur Verbesserung der Positionsregelung. Der Doppelhubkolben 1 begrenzt einen ersten Arbeitsraum bzw. Druckkammer 3a und einen zweiten Arbeitsraum bzw. Druckkammer 3b. Beide Arbeitsräume 3a, 3b sind über Rückschlagventile 4a und 4b mit einem Vorratsbehälter 5 verbunden. Die Rückschlagventile 4a, 4b weisen einen gro-ßen Öffnungsquerschnitt auf, damit eine Drosselwirkung vermieden wird.

Die Druckerzeugungseinrichtung regelt den Druck in den beiden zwei hydraulischen Kreisen K1 und K2. In den Zuleitungen H3, H4 zwischen den Arbeitsräumen 3a, 3b und den hydraulischen Kreisen K1 und K2 sind Druckgeber 7 und 7a angeordnet. Auf die Druckgeber 7 oder 7a kann für die Regelung verzichtet werden, indem über die Phasenstrommessung das Drehmoment des Motors M berechnet wird und über die wirksame Querschnittsfläche der Systemdruck in der Hydraulikleitung H3, H4 berechnet wird, in der kein Druckgeber vorgesehen ist. Aus Sicherheitsüberlegungen und zur Kalibrierung der Druckvolumenkennlinie ist jedoch zumindest ein Druckgeber sinnvoll. Auch kann die Phasenstrommessung redundant ausgeführt werden, um auf die Druckgeber komplett verzichten zu können.

Zudem sind zwei schaltbare Ventil PD1 oder PD2 vorgesehen, die auch als Druckabbauventile bezeichnet werden können, welche in der den jeweiligen Arbeitsraum 3a, 3b mit dem Vorratsbehälter 5 verbindenden Hydraulikleitung H1, H2 angeordnet sind. Damit ist ein Druckabbau aus beiden Arbeitsräumen 3a, 3b in den Vorratsbehälter 5 möglich. Durch Öffnen eines oder beidet Ventile PD1 oder PD2 kann bei Vor- oder Rückhub über Wegsteuerung sk oder Stillstellung des Doppelhubkolbens 1 der Druck kontrolliert abgebaut werden. Für die Druckabbauregelung wird dabei zumindest einer der beiden Druckgeber 7, 7a oder die Strommessung verwendet. Dies ist insbesondere vorteilhaft gegenüber einer Druckregelung über klassische Auslassventile mit PWM-Betrieb, da der Druck mit einer hohen Genauigkeit kontrolliert abgebaut werden kann. Bei klassischen Auslassregelung mit vorgeschalteten geschlossenen Schaltventilen Ventilen (z.B. Auslassventil zwischen SV1 und Verbraucher V1 bzw. Auslassventil zwischen Verbraucher V2 und SV2, Verweis auf Fig. 4b) ist diese Druckregelgenauigkeit nicht möglich, da kein Druckgeber zur Druckabbauregelung in einer derartigen Anordnung wie üblich bei Bremsregelsystemen verwendet werden kann.

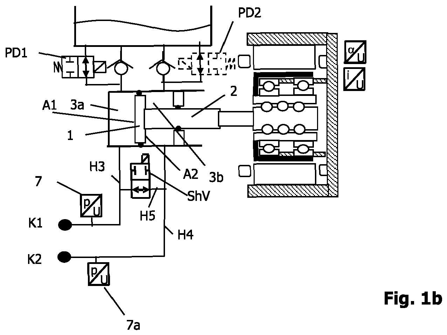

**Fig.1b** zeigt eine weitere mögliche Ausführungsform der erfindungsgemäßen Druckerzeugungseinrichtung, bei der der Arbeitsraum 3a mit der Wirkfläche A1 und der zweite Arbeitsraum 3b mit der Wirkfläche A2 des Kolbens 1 begrenzt ist. Das Verhältnis der Flächen A1 und A2 ist näherungsweise 2:1, mindestens jedoch 1,5:1 und maximal 2,5:1. Zusätzlich ist zwischen den Kammern 3a, 3b ein schaltbares Druckausgleichsventil ShV angeordnet. Das schaltbare Ventil ShV ist bei hochdynamischen Systemen als Schaltventil ohne Drosselfunktion ausgeführt und weist demzufolge einen großen Durchflussquerschnitt auf. Die die Druckkammern 3a, 3b bzw. die von diesen zu den Verbrauchern führenden hydraulischen Leitungen H3, H4 verbindende, das Schaltventil ShV enthaltende Verbindungsleitung ist möglichst kurz und beginnt zumindest an einer Druckkammer möglichst unmittelbar am Ausgang der Kolben-Zylinder-Einheit. Insbesondere sollen den Strömungswiderstand erhöhende Elemente, wie zusätzliche Ventile etc., in diesem Bereich möglichst vermieden werden. Alternativ können statt einem Schaltventil ShV auch mehrere Schaltventile parallel in der Verbindungsleitung H5 geschaltet sein. Durch eine derartige Parallelschaltung können Standardventile aus der Großserienfertigung eingesetzt werden. Durch Schalten des Druckausgleichsventils ShV kann eine Verbindung zwischen Vorder- und Rückseite des Doppelhubkolbens 1 herstellt werden und beim KolbenHub unterschiedliche Wirkflächen durch Druckausgleich realisiert werden. Bei einem weniger dynamischen Systemen bzw. Einsatz weniger Verbraucher im System ist der Durchflussquerschnitt des Schaltventiles ShV und der Strömungswiderstand der hydraulischen Leitungen, die die Arbeitskammern des Doppelhubkolben verbinden weniger relevant und die Verbindung kann auch über mehrere Ventile z.B. im Hydraulikkreis erfolgen.

Durch die Druckerzeugungseinrichtung werden zwei hydraulische Kreise K1 und K2 versorgt. Bei geschlossenem Ventil ShV wird im Vorhub der Kreis 1 und im Rückhub der Kreis 2 mit Druck versorgt. Bei offenem Ventil ShV wird im Vor- und Rückhub sowohl Kreis K1 und Kreis K2 gemeinsam versorgt mit der wirksamen Fläche A1-A2 (im Vorhub) bzw. A2 (im Rückhub). Der Druck in zumindest einer Hydraulikleitung H3, H4 wird mittels eines Druckgebers 7, optional auch mittels der beiden Druckgeber 7, 7a ermittelt. Auf einen Druckgeber kann für die Regelung verzichtet werden, wenn über die Phasenstrommessung das Drehmoment des Motors M berechnet und über die wirksame Querschnittsfläche der Systemdruck berechnet wird.

**Fig.1c** stellt eine Erweiterung der Druckerzeugungseinrichtung aus Fig.1b dar, wobei weitere Schaltventile SV1, SV1a und SV2 in den Hydraulikleitungen H3, H4 vorgesehen sind. In dieser Schaltung sind an den Ausgängen der vorderen Kammer 3a und hinteren Kammer 3b die Schaltventile SV1 und SV2 angeordnet und das Schaltventil ShV verbindet direkt den Hydraulikkreis K1 mit der Kammer 3b. Das Schaltventil SV1a ist dann vor der Verbindungsleitung H5 und dem Hydraulikkreis K1 angeordnet.

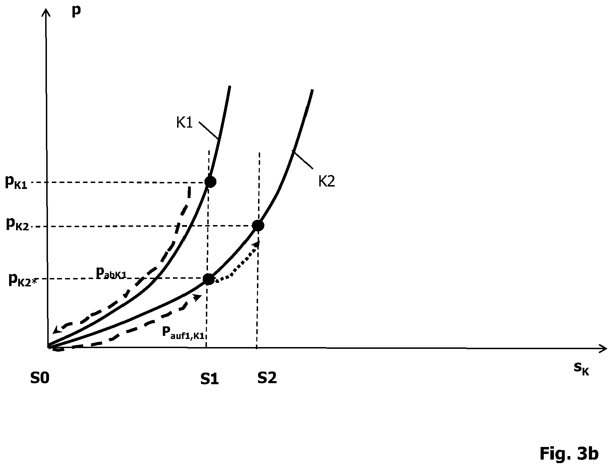

Diese Erweiterung bewirkt einen größeren Funktionsumfang für die Regelung der Verbraucher. Dabei hat der Doppelhubkolben 1 über die Hubsteuerung, teilweise unter Nutzung der Druckvolumenkennlinie und des Druckgebers 7a und 7b (siehe Ausführung Fig. 3b) in dieser Ausführungsform die folgenden Freiheitsgrade:
- Druckaufbau individuell in Kreis K1 und Kreis K2;
- Druckaufbau gemeinsam in Kreis K1 und Kreis K2;
- Druckabbau individuell in Kreis K1 und Kreis K2;
- Druckabbau gemeinsam in Kreis K1 und Kreis K2;
- gleichzeitiger Druckaufbau in Kreis 1 und Druckabbau in Kreis 2;
- gleichzeitiger Druckaufbau in Kreis 2 und Druckabbau in Kreis 1;

Für die Umsetzung dieser Funktionen werden die Ventile in Fig. 1c wie folgt geschaltet. Hierbei sei angemerkt, dass auf das Ventil PD2 sowie die Hydraulikleitung H2 für die nachfolgend beschriebenen Regelungen auch verzichtet werden kann, da es in den aufgeführten Funktionen immer geschlossen betrieben wird und daher in der Funktion einem Rückschlagventil entspricht

| | Druckaufbau P_{auf} K1 | | Druckaufbau p_{auf} K2 | |
|---|---|---|---|---|
| DHK-Hubrichtung | Vorhub | Rückhub | Vorhub | Rückhub |
| ShV | 0 | **1** | Mit Schaltung Fig. 1b (Fig 4a, SV1 am Verbraucher) ShV, SV2 offen | 0 |
| SV1 | **1** | 0 | | 0 |
| SV2 | 0 | 0 | | **1** |
| PD1 | 0 | 0 | | 0 |
| PD2 | 0 | 0 | | 0 |

| | Druckabbau p_{ab} K1 | | Druckabbau p_{ab} K2 | |
|---|---|---|---|---|
| DHK-Hubrichtung | Vorhub | Rückhub | Vorhub | Rückhub |
| ShV | 1 | **1** | 0 | Mit Schaltung Fig 4a (SV1 am Verbraucher)SV2 und ShV offen |
| SV1 | 0 | **1** | 0 | |
| SV2 | 0 | 0 | **1** | |
| PD1 | 1 | 0 | **1** | |
| PD2 | 0 | 0 | 0 | |

| | Druckabbau p_{auf} K1+K2 | | Druckabbau p_{ab} K1+K2 | |
|---|---|---|---|---|
| DHK-Hubrichtung | Vorhub | Rückhub | Vorhub | Rückhub |
| ShV | **1** | **1** | **1** | **1** |
| SV1 | **1** | 0 | **1** | 0 |
| SV2 | **1** | **1** | **1** | **1** |
| PD1 | 0 | 0 | 0 | **1** |
| PD2 | 0 | 0 | 0 | 0 |

| | | | | |
|---|---|---|---|---|
| Bezeichnungen: **0: Ventil geschlossen** **1: Ventil geöffnet** | | | | |

Weitere Freiheitsgrade des gleichzeitigen geregelten Druckauf- und Druckabbau können genutzt werden, wenn sowohl das Ventil PD1 als auch das Ventil PD2 vorgesehen und verwendet werden. Damit kann zusätzlich zu den oben genannten Möglichkeiten der Druck in jeweils einem der beiden Hydraulikkreise K1, K2 oder auch in beiden Hydraulikkreisen K1 und K2 druckgeregelt über die Kammern 3a, 3b des Doppelhubkolbens unter Verwendung der Druckgeber 7 und 7a und der Ventile PD1, PD2 gesteuert abgebaut werden.

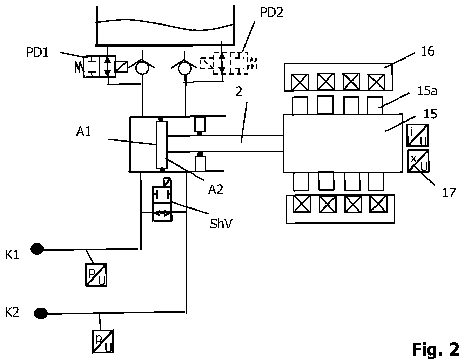

**Fig.2** beschreibt die gleiche Druckerzeugungseinrichtung wie Fig. 1a mit dem Unterschied, dass der Druckstangenkolben 2 über einen Linearaktor betätigbar ist, bestehend aus einen Anker 15 mit Permanentmagneten 15a, einem Stator mit Erregerspulen 16 und einen Linearwegsensor 17. Die Funktion ist die gleiche wie bei Fig.1a. Linearaktoren haben Vorteile im Vergleich zu Motor-Gewindetrieben, wenn der Doppelhubkolben auf kleine Hübe ausgelegt ist und geringe Kräfte im System auftreten. Optional wird das Verbindungsventil ShV eingesetzt, dass die gleiche Wirkweise hat wie in Fig. 1b beschrieben.

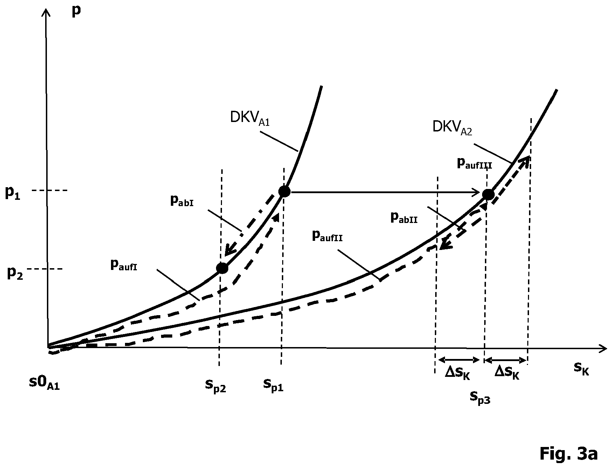

**Fig.3a** beschreibt die Regelstrategie zur genauen Druckregelung über Abbildung einer Druck-Volumen (Weg)-Kennlinie in einem Zusammenhang zwischen Druckstangenweg sk und Druck p. Zur Abbildung der Druckvolumenkennlinie wird der Drucksensor 7 der Figuren 1a, 1b, 1c genutzt. Im Betrieb kann die Druckvolumenkennlinie abgeglichen werden.

Dieses Verfahren wird insbesondere beim Druckaufbau und Druckabbau von Kupplungsstellern und weiteren Verbrauchern, wie z.B. Gangstellern, genutzt, wenn kein gleichzeitiger Druckaufbau und Druckabbau erforderlich ist, d.h. entweder eine Kupplung oder ein Gangsteller betrieben in sequentieller Reihenfolge wird.

Ein Verhältnis der Kammerflächen des Doppelhubkolbens von näherungsweise A1/A2=2 ist in der Darstellung zugrunde gelegt. Der Druckaufbau beginnt von einem Ausgangsdruck s0_{A1} . Ein gewünschter Regeldruck p1 wird eingestellt durch Aussteuerung des Linearaktuators beim Druckaufbau p_{aufI} mit Fläche A1 z.B. im Vorhub bis zur Position Sₚ₁, beim Druckaufbau p_{aufII} mit Fläche A2 z.B. im Rückhub bis zur Position Sp₃. Bei der Regelung wird die Druck-Weg-Kennlinie zugrunde gelegt, die den nichtlinearen Zusammenhang zwischen Druck und Weg abbildet. Es können auch geringere Drücke als p1 über die Druckwegkennlinie eingesteuert werden. Bei Umschalten auf die Wirkfläche A2 verschiebt sich die Druckvolumenkennlinie. Es ergibt sich ein neuer Referenzweg sₚ₃. Druckänderungen können durch Einstellen von Differenzwegen Dsk eingestellt werden. Die weggesteuerte Druckregelstrategie hat den Vorteil, dass der Druck deutlich besser eingestellt werden kann, wenn die Regelung über Hub erfolgt und nicht über Nutzung des Drucksensors, da damit Druckschwingungen und Elastizitäten der Druckleitung nicht als Störgrößen die Regelung beeinflussen und keine hohen Anforderungen an die Genauigkeit von Druckgebern gestellt werden müssen.

Wird die Druckregeleinheit gemäß Fig.1b eingesetzt, d.h. mit Druckabbauventil PD1, kann über die Wegsteuerung sk der Druck auch im Abbau über den Druck-Weg-Zusammenhang geregelt werden (p_{abI}). Dazu wird der Kolben 1 im Rückhub betrieben. Dabei muss dafür gesorgt werden, dass das Volumen in der zweiten Kammer 3b nicht komprimiert wird, d.h. über PD2 in den Vorratsbehälter entweichen kann. Ein vergleichbarer Druckabbau (p_{abII}) kann auch im Vorhub bei kleinerer Wirkfläche geregelt werden. Dazu wird das Volumen über Vorratsbehälter PD2 in den Vorratsbehälter abgelassen. Ein gleicher Effekt im Druckabbauverfahren p_{abII} wird erzielt, wenn im Rückhub das ShV-Ventil geöffnet ist. Dann ist kein PD1 oder PD2-Ventil zum Druckabbau erforderlich. Das verdrängte Volumen wird von der hinteren Kammer 3b in die vordere Kammer des Doppelhubkolbens gefördert.

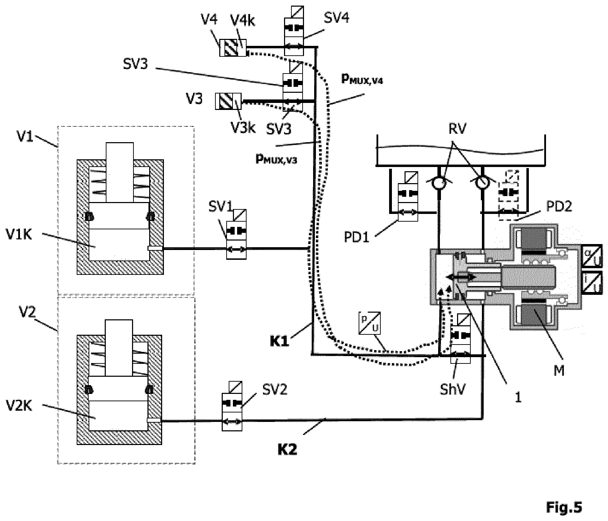

**Fig.3b** beschreibt das Regelverfahren bei gleichzeitigem Druckaufbau und Druckabbau über beide Kammern des DHK (z.B. bei der Betätigung von 2 Kupplungen im Systemaufbau gemäß Fig. 5). Dort sind leicht unterschiedliche Druckvolumenkennlinien zweier Nehmerkolben zugrunde gelegt bzw. alternative gleiche Druckvolumenkennlinien der Nehmerkolben und eine Doppelhubkolbenauslegung mit einem Flächenverhältnis der hydraulischen Flächen A1/A2 = S2/S1.

Dazu wird ausgehend von der Position S1 der Kolben im Rückhub von der Position S1 zur Position S2 verstellt. Der Druck der Kupplung K1 wird vom Betriebsdruck p_{K1} auf annähernd Null reduziert, während gleichzeitig der Druck in Kupplung K2 von annähernd Null auf p_{K2} erhöht. Danach wird der Steller weiter bewegt bis zum Stellung S2, bis der Betriebsdruck pK2 erreicht wird. In der Rückhubbewegung wird das fehlende Volumen aus der Vorratskammer über die Rückschlagventile in die vordere Kammer des DHK gefördert, um Unterdruck zu vermeiden. Dieses Verfahren hat gegenüber einem sequentiellen Verfahren den signifikanten Vorteil, dass die eine Kupplung K1 sehr schnell gelöst werden kann, während gleichzeitig die Kupplung K2 angelegt wird.

Dies ist insbesondere für einen Schaltvorgang mit minimalen zeitlichem Verzug, was bei einem Doppelkupplungssystem gefordert ist, erreicht. Zudem kann der Druck in einer Kupplung als Energiequelle genutzt werden, so dass ein Antriebsmotor mit minimalen Leistungsbedarf nur erforderlich ist, bzw. die Dynamik des Schaltvorganges gegenüber einem 2-Aktuatorsystem bei gleichem Motor im Schaltvorgang signifikant verbessert werden kann, da die gespeicherte hydraulische Energie im Schaltvorgang genutzt werden kann.

Durch Einsatz eines ShV-Ventils und entsprechender Ansteuerung kann zudem die Steuerung optimiert werden, z.B. dass der Loslösvorgang einer Kupplung K1 mit dem Anlegevorgang der zweiten Kupplung synchronisiert wird, d.h. mit einem Verstellweg in der Mitte zwischen S1 und S2 (d.h. S=0,5*(S1+S2) der Vorgang abgeschlossen wird.

Insbesondere beim umgekehrten Vorgang (d.h. Kupplung K2 wird vom Betriebsdruck pK2) gelöst durch einen Verstellweg S2, ist der Einsatz des AV-Ventil sinnvoll, ansonsten wird der Betriebsdruck pK1 von Kupplung K1 überschritten. Abhilfe ist zudem der Einsatz von Ablassventilen (PD1 oder PD2) bzw. weiterer Auslassventile im System. Hier kommt dem PD1-Ventil eine Bedeutung zu, da der Druckabbau in Kupplung K1 über das Ablassventil PD1 unter Verwendung des Druckgebers in K1 genau gesteuert werden kann, auch ohne Verwendung eines ShV-Ventils. PD1 und ShV sind daher Alternativen und nicht zwingend beide erforderlich. Das PD2-Ventil hat eine ähnliche Bedeutung, wenn das Flächenverhältnis A1/A2 annähernd gleich ist und der Kupplungssteller K2 ein größeres Volumen aufweist.

Alternativ zur Druckversorgereinheit kann auch die DHK-Druckversorgereinheit mit einer Ventilschaltung wie in Fig.2 erläutert eingesetzt werden.

**Fig. 4** stellt die eine Ausführungsform der Druckerzeugungseinrichtung gemäß Ausführung in Fig.1b dar, in der das Potential des Doppelhubkolbens 1 genutzt wird. Die Druckerzeugungseinrichtung kann auch in der Ausgestaltungsform gemäß Fig.1c eingesetzt werden, in der die Schaltventile SV1 und SV2 Bestandteil der Druckversorgereinheit sind (SV1a=SV1, SV2=SV2). Jeder Arbeitsraum 3a, 3b ist mit einem Nehmerzylinder V1K, V2K der beiden Kupplungen V1 und V2 verbunden. Diese Systemgestaltung ermöglicht den Druckabbau der Kupplung K1 (p_{abK1}) über die vordere Kammer 3a des Doppelhubkolbens während gleichzeitig der Druckaufbau in der Kupplung K2 (p_{aufK2}) über Verstellung in Rückhubrichtung des Doppelhubkolbens erfolgt. Der gleichzeitige Druckaufbau und Druckabbau kann auch in Vorhubrichtung erfolgen. In diesem Fall wird durch Vorhubbewegung des Doppelhubkolbens der Druck im Verbraucher V2 abgebaut und in Verbraucher V1 aufgebaut. Unterstützend kann sowohl PD1 als auch PD2 zur Druckabbauregelung verwendet werden. Das ShV-Ventil kann ebenfalls zum Druckabbau- als auch für die Druckaufbauregelung geöffnet werden und den über die Bewegung des Doppelhubkolbens sich veränderlichen Druck beeinflusst werden, in dem die Kreise K1 und K2 verbunden werden.

Eine weitere Möglichkeit der Druckregelung ist in Figur 4a dargestellt und besteht darin, dass der Druck aus mindestens einem der Verbraucher V1, V2 über ein zugeordnetes Auslassventil AV_{K1}, AV_{K2}, welches vorzugsweise zwischen Verbraucher und Schaltventil SV1 angeschlossen ist, direkt über eine gesonderte Hydraulikleitung H6, H7 in das Vorratsbehältnis 5 abgebaut werden. In der Fig. 4a ist dies am Beispiel des Druckabbaus (p_{abK2}) im Kreis K2 bei gleichzeitigem Druckaufbau im Kreis K2 (p_{aufK1}) illustriert. Insbesondere wenn die Flächen in Arbeitsraum 3a und 3b unterschiedlich sind, wird beim Vorhub in die Kammer V1K mehr Volumen gefördert als der Kammer V2K entnommen wird. Um eine Symmetrie beim Druckabbau und Druckaufbau zu erreichen, wird Volumen über AVK1 (p_{abK1}) in den Vorratsbehälter abgelassen. Zur Druckregelung kann dabei der Druckgeber in H3 ebenfalls zum Druckabbau über AV_{K1} verwendet werden, da beim Druckänderungsvorgang SV1 zum Verbraucher geöffnet ist. Die Druckregelung erfolgt gemäß dem in DE 10 2015 103 858.7 beschriebenen Verfahren (Druckvolumenregelung im offenen Hydraulickreis). Es können auch mehrere Auslassventile AV_{K1}, AV_{K2} eingesetzt werden an jedem Verbraucher bzw. je ein oder mehrere Auslassventile je Hydraulickreis K1, K2, die die Kreise mit dem Vorratsbehälter verbinden. Die Auslassventile AV_{K1}, AV_{K2} können eines oder beide Ventile PD1 und PD2 ersetzen. Sofern keines der Ventile PD1 und PD2 vorgesehen sind, so ist zumindest ein Druckabbauventil AV_{Ki} erforderlich, das einen Hydraulikkreis K1 oder K2 mit dem Vorratsbehälter für den Druckabbau verbindet. Der Einsatz eines AV-Ventil mit vorgeschaltetem Schaltventil anstelle PD1 und PD2 hat den Nachteil, dass der Druckabbau bei geschlossenen Schaltventil SV1 keine Druckinformation nutzen kann und somit die Ventile im Sinne der Erfüllung einer genauen Druckabbaugenauigkeit und der Fertigungstoleranzen mit kleinen Öffnungsquerschnitten ausgestattet werden müssen bzw. über PWM-Steuerung betrieben werden müssen. Die Sonderlösung bietet jedoch den Vorteil, dass in einer Übergangsphase einer Systemeinführung Standardauslassventile, die in Großserie gefertigt werden sowie die Software für eine Druckabbausteuerung bekannt aus den Betrieb von Bremssystemen eingesetzt werden können.

Durch das Vorsehen von Auslassventilen kann in einer Systemeinführung in einem ersten Schritt der Vorteil der genauen Druckaufbauregelung über Kolbenwegsteuerung sowie die gleichzeitige Druckänderungsmöglichkeit (Druckabbau in Kammer V1k, Druckaufbau in Kammer V2K) über die Wirkungsweise des Doppelhubkolbens genutzt werden, insbesondere bei der Betätigung von 2 Kupplungen, die gleichzeitig geschaltet werden müssen.

Zudem kann das Ventil ShV bei einem Flächenverhältnis A1/A2 von näherungsweise 2:1 bei gleichem Volumenhaushalt der Kupplungen V1 und V2 zum Downsizing des Drehmomentes des Antriebsmotors genutzt werden. Damit kann ab einem bestimmten Betriebsdruck (ca. 50% des Betriebsdruckes) im Vorhub die hydraulisch wirksame Fläche halbiert werden und dann näherungsweise so groß wie im Rückhub.

Die stromlos offenen Schaltventile SV1 und SV2 ermöglichen, dass bei Erreichen des Solldruckes der Kupplung durch Bestromung geschlossen werden und mit einem geringen Ventilstrom der Druck im Nehmerkolbenhydraulik gehalten wird. Dadurch kann die Strombelastung des Motors M und der Leistungsbedarf reduziert werden und die Regelung erleichtert werden, insbesondere kann bei Erreichen des Solldruckes der Verbraucher abgetrennt werden und in einem sequentiellen Schritt der andere Verbraucher auf das Solldruckniveau über die Druckvolumensteuerung eingeregelt werden.

Alternativ zur Druckversorgereinheit kann auch die Druckerzeugungseinrichtung mit einer Ventilschaltung wie in Fig.2 erläutert eingesetzt werden. Die Ventilschaltung der Fig.2 kann auch vergleichbar wie Fig.1b auf Fig.1c angepasst werden. Das gleiche gilt für die folgenden Systembeschreibungen in Fig. 5 und 6.

**Fig. 5** zeigt eine Erweiterung des in Fig. 4 beschriebenen Systems für die zusätzliche Betätigung von mehreren Verbrauchern V3, V4 bei gleichzeitigem Verzicht auf einen Druckgeber im Kreis K2. Alternativ ist auch ein Druckgeber im Kreis K2 möglich und im Kreis K1 wird auf den Druckgeber verzichtet. Dazu sind für jeden Verbraucher V1-V4 Schaltventile SV1, SV2, SV3, SV4 vorgesehen. Die Gangsteller werden im sog. Multiplexverfahren gesteuert, d.h. Bestätigung von hydraulischen Verbrauchern VS3 oder VS4 sind die stromlos offenen Schaltventile der Kupplungssteller geschlossen, so dass der Druck durch Bestromung der Magnetventile gehalten wird bzw. nicht über die Bestätigung Druck aufgebaut wird. Der Druck des Nehmerkolbens des Verbrauches V3 bzw. V4 wird wie bereits beschrieben über den Doppelhubkolben unter Berücksichtigung der Druckvolumenkennlinie auf- oder abgebaut (P_{MUX,V3}, p_{MUX,V4}). Ist der Druck erreicht wird, wird das Schaltventil SV3 bzw. SV4 geschlossen und in einem nachfolgenden Ablauf kann ein weiterer Verbraucher betätigt werden. Dieses Verfahren wird in der Regel insbesondere beim Einsatz von Gangsteller sequentiell durchgeführt, da keine gleichzeitige Bestätigung von Gangsteller erfolgt werden und in einem Doppelkupplungsgetriebe und zudem der Gangstellvorgang nicht zeitgleich zum Kupplungsbetätigungsvorgang stattfindet. Das Verfahren bietet jedoch die Möglichkeit des simultanen bzw. teilsimultanen Druckaufbau und Druckabbau, wie aus dem Multiplexbetrieb des Erfinders bekannt.

Durch die Erweiterung des Kupplungsbetätigungssystems auf weitere Verbraucher kann das System signifikant vereinfacht werden gegenüber herkömmlichen Doppelkupplungssystemen, bei dem für jeden Gangsteller und jede Kupplung ein Antriebsmechanismus vorgesehen ist. Da Schaltventile, auch mit geringem Strömungswiderstand vergleichsweise günstig und leicht sind, kann damit eine signifikante Kosten- und Gewichtsreduzierung erreicht werden.

**Fig. 6** zeigt eine Alternative zu Fig. 5, in dem im Multiplexbetrieb 2 Kammern V1K1 und V1K2 eines Verbrauchers V1 neben einem zweiten Verbraucher V2 mit der erfindungsgemäßen Druckerzeugungseinrichtung mit Druck beaufschlagt werden. Im Gegensatz zu Fig.5 ist der Kolben des Verbrauchers V1 in beide Richtungen verstellbar, wobei bei der Verstellung der Stange in V1 beide Hydraulikkreise K1 und K2 genutzt werden, in dem in einer Kammer des Doppelhubkolbens Druck abgebaut wird und durch Verschiebung des Kolbens in einer anderen Kammer Druck aufgebaut wird. Zur Regelung werden die Ventil PD1, PD2 oder SHV zusätzlich genutzt, wobei nur maximal 2 Ventile zur Regelung erforderlich sind. Vergleichbar zu Fig. 4a kann auch ein Auslassventil AV_{K3} zwischen einer Hydraulikammer eines Verbrauchers, hier exemplarisch für den Verbraucher V3 dargestellt und dem jeweiligen Schaltventile SV3 angeschlossen werden, über das der Druck aus der Kammer V3k über eine gesonderte Hydraulikleitung H8 unmittelbar zum Vorratsbehältnis 5 abgeleitet werden kann, wobei die zur Fig. 4a beschriebenen Nachteile in Kauf zu nehmen sind.

In dieser Ausführung wird der Druck in der Kammer V1K2 oder V1K2 mit Druck versorgt und der Kolben mit der erfindungsgemäßen Druckregelmethode sehr genau verstellt. In der Anwendung können die Verbraucher beispielsweise eine Lenkung oder Gangsteller (V1) als auch eine Kupplung (V2) darstellen.

An die Hydraulikkreise K1 und K2 können weitere Verbraucher V3, V4 mit vorgeschalteten Schaltventilen SV4 und SV5 mit Wirkprinzip der Verbraucher V1 bzw. V2 angeschlossen werden und im Multiplexbetrieb betrieben werden. So kann beispielweise ein komplettes Doppelkupplungsgetriebe (mit 2 Kupplungen, 4 Gangsteller) bzw. eine mehrere Kupplungen sowie eine Lenkung mit einer Druckversorgereinheit betrieben werden bzw. andere hydraulische Systeme mit einem zentralen Steller mit Druck versorgt werden (z.B. elektrohydraulischer Ventiltrieb).

### Bezugszeichenliste

- 1: Kolben beidseitig wirkend bzw. Doppelhubkolben
- 2: Druckstangenkolben
- 3a: Kammer
- 4a: Rückschlagventil
- 4b: Rückschlagventil
- 5: Vorratsbehälter
- 6a: Rückschlagventil
- 6b: Rückschlagventil
- 7: Druckgeber
- 8: Kugelgewindetrieb
- 9a: Lager
- 9b: Lager
- 10: Rotor
- 11: Stator
- 12: Erregerspulen
- 13: Gehäuse
- 14: Geber
- 15: Anker
- 15a: Permanentmagnete
- 16: Stator mit Erregerspulen
- 17: Linearwegsensor
- 20: Druckregeleinheit
- 21a: Druckaufbauventil
- 21b: Druckablassventil
- 22a: Druckaufbauventil
- 22b: Druckablassventil
- 23: Leitung
- 24: Leitung
- 32a: Leitung
- 32b: Leitung
- 33a: Magnetventil
- 33b: Magnetventil
- 34: Stellkolben-Zylinder-Einheit
- 35: Druckkammer
- 36: Dichtung
- 37: Druckkolben
- 38: Feder
- 39: Wirkkolben
- 40: Stellkolben-Zylinder-Einheit
- 41: Druckraum
- 42: Druckraum
- 43: Stellkolben
- 44: Dichtung
- 45: Schnüffellochdichtung
- 46: Vorratsbehälter
- 47: Drucksensor
- 48: Wegsimulator
- 49: Pedaleinheit
- 50: hydraulischer Kreis
- 51: hydraulischer Kreis
- 52: Drucksensor
- 53: Drucksensor
- 54: Wegsensor
- 55: elektr. Steuer- und Regeleinheit (ECU)
- AV: Druckausgleichsventil schaltbar
- D1: Dichtung
- D2: Dichtung
- K1: hydraulischer Kreis
- K2: hydraulischer Kreis
- SiV: Sicherheitsventil
- Sk: Weg
- TV: Trennventil
- V1: Verbraucher
- V2: Verbraucher
- V3: Verbraucher bzw. Kupplungsbetätigung
- V4: Verbraucher bzw. Bremssystem

## Patentansprüche

1. Druckerzeugungseinrichtung mit einer Kolben-Zylinder-Einheit (DE), die einen beidseitig wirkenden Kolben (1) aufweist, der zwei Arbeitsräume (3a, 3b) im Zylinder voneinander abdichtend trennt, wobei der Kolben (1) zwei, insbesondere unterschiedlich große, Wirkflächen (A1, A2) aufweist und jede Wirkfläche (A1, A2) des Kolbens (1) jeweils einen Arbeitsraum (A1, A2) begrenzt, wobei jeder Arbeitsraum (3a, 3b) über eine erste hydraulische Leitung (H3, H4) mit einem hydraulischen Kreis (K1, K2) in Verbindung ist, wobei an jedem hydraulischen Kreis (K1, K2) mindestens eine hydraulische Kammer eines Verbrauchers (V1K1, V1K2, V2K, V3K, V4K) angeschlossen ist, wobei ein Antrieb (M) den Kolben (1) der Kolben-Zylinder-Einheit (DE) antreibt, **dadurch gekennzeichnet, dass**
- jeder Arbeitsraum (3a, 3b) mittels jeweils einer zweiten Hydraulikleitung (H1, H2) mit einem Vorratsbehältnis (5) für ein Hydraulikmedium in Verbindung ist, wobei in jeder zweiten Hydraulikleitung (H1, H2) ein Schaltventil (PD1, PD2) zum wahlweisen Absperren oder Öffnen der Hydraulikleitung (H1, H2) angeordnet ist.

2. Druckerzeugereinrichtung nach Anspruch 1, die derart eingerichtet ist, einen Druck mittels des Kolbens (1) in den hydraulischen Kreisen (K1, K2) entweder individuell oder gemeinsam aufzubauen, wobei die Druckerzeugungseinrichtung ferner derart eingerichtet ist, beim individuellen Druckaufbau in nur einem Kreis den Druck nur über einen Arbeitsraum (3a,3b) des Doppelhubkolbens aufzubauen.

3. Druckerzeugungseinrichtung nach Anspruch 1, **dadurch gekennzeichnet, dass** die Wirkflächen (A1, A2) in einem Verhältnis von 1,5 zu 1 bis 2,5 zu 1, insbesondere 2 zu 1 zueinander stehen.

4. Druckerzeugungseinrichtung nach Anspruch 1, **dadurch gekennzeichnet, dass** die Arbeitsräume (3a, 3b) und/oder die hydraulischen Leitungen oder die hydraulischen Kreise K1/K2 über eine Verbindungsleitung (H5) miteinander verbunden sind, wobei in der Verbindungsleitung (H5) mindestens ein Schaltventil (ShV), insbesondere mehrere parallel geschaltete Schaltventile (ShV), zum wahlweise Öffnen oder Zusperren der Verbindungsleitung (H5) angeordnet ist, sodass ein Druckaufbau und/oder Druckabbau über den jeweils wirkenden Arbeitsraum (3a, 3b) anstatt im ersten hydraulischen Kreis K1 auch im zweiten hydraulischen Kreis K2 oder umgekehrt erfolgt.

5. Druckerzeugungseinrichtung nach einem der vorhergehenden Ansprüche, **dadurch gekennzeichnet, dass** jedem hydraulisch wirkenden Arbeitsraum (V1k, V2K, V1K1, V1K2) der Verbraucher (V1, V2, V3, V4, V5) je ein Schaltventil (SV1, SV2, SV3, SV4, SV5) in direkter Verbindung zum hydraulischen Verbraucher (V1, V2, V3, V4, V5) zum wahlweise Absperren oder Öffnen der jeweiligen Hydraulikleitung zur Druckversorgungseinrichtung (DE) zugeordnet ist.

6. Druckerzeugungseinrichtung nach einem der vorhergehenden Ansprüche, **dadurch gekennzeichnet, dass** der Druckabbau in mindestens einem Verbraucher (V1, V2, V3, V4, V5) mittels Verstellen des Kolbens (1) und/oder durch Öffnen mindestens eines Schaltventils (PD1, PD2, ShV, AV_{K1}, AV_{K2}) erfolgt, wobei bei jeweils geöffnetem Schaltventil (PD1, PD2) sich das Hydraulikmedium zum Druckabbau in einem oder mehreren der Verbraucher (V1, V2, V3, V4, V5) über den jeweiligen Arbeitsraum (3a, 3b) oder unmittelbar über das Auslassventil (AV_{K1}, AV_{K2}) in das Vorratsbehältnis (5) entspannt bzw. abfließt, wobei in einer jeweiligen Zuleitung zum jeweiligen mindestens einen Verbraucher (V1, V2, V3, V4, V5) jeweils ein Schaltventil (SV1, SV2) zum Abtrennen der Zuleitung zwischen dem jeweiligen Arbeitsraum (3a, 3b) und dem mindestens einen Verbraucher (V1, V2, V3, V4, V5) angeordnet ist.

7. Druckerzeugungseinrichtung nach einem der vorhergehenden Ansprüche, die derart eingerichtet ist mittels Verstellen des Kolbens (1) den Druck simultan oder teilsimultan in mehreren Verbrauchern (V1, V2, V3, V4, V5) aufzubauen oder abzubauen oder in mindestens einem Verbraucher (V1, V2, V3, V4, V5) aufzubauen und in mindestens einem anderen Verbraucher (V1, V2, V3, V4, V5) abzubauen, wobei dabei das Schaltventil (ShV), sofern vorhanden, geschlossen ist.

8. Druckerzeugungseinrichtung nach einem der vorhergehenden Ansprüche, **dadurch gekennzeichnet, dass** die Druckversorgereinheit mindestens zwei Verbraucher (V1, V2, V3, V4, V5) mit Druck versorgt, wobei ein Verbraucher(V1, V2, V3, V4, V5) eine Fahrzeugkupplung ist.

9. Druckerzeugungseinrichtung nach einem der vorhergehenden Ansprüche, **dadurch gekennzeichnet, dass** die Druckversorgereinheit mindestens Hydraulikkammer mit Druck versorgt, wobei die ersten zwei Verbraucher (V1, V2) jeweils eine Kammer eines Verbrauchers (V1K, V2K, V3K, V4K, V5K) zur Betätigung eines beidseitig wirkenden Kolbens, insbesondere zur Betätigung einer Lenkungsstange ist.

10. Verfahren zum wahlweisen Druckauf- und Druckabbau in mindestens zwei hydraulischen Kammern eines oder mehrerer Verbraucher (V1, V2, V3, V4, V5), mittels einer Druckerzeugungseinrichtung, insbesondere mittels einer Druckerzeugungseinrichtung nach einem der vorhergehenden Ansprüche, welche eine Kolben-Zylinder-Einheit (DE) aufweist, die einen beidseitig wirkenden Kolben (1) hat, der zwei Arbeitsräume (3a, 3b) im Zylinder voneinander abdichtend trennt, wobei der Kolben (1) zwei Wirkflächen (A1, A2) aufweist und jede Wirkfläche (A1, A2) des Kolbens (1) jeweils einen Arbeitsraum (A1, A2) begrenzt, wobei jeder Arbeitsraum (3a, 3b) über eine hydraulische Leitung (H3, H4) mit einem hydraulischen Kreis (K1, K2) in Verbindung ist, wobei an jedem hydraulischen Kreis (K1, K2) mindestens eine hydraulische Kammer eines Verbrauchers (V1K, V1K1, V1K2, V2K, V3K, V4K) angeschlossen ist, und ein Antrieb (M) den Kolben (1) der Kolben-Zylinder-Einheit (DE) antreibt, **dadurch gekennzeichnet, dass**
der Druckaufbau in den hydraulischen Kammern über eine Kolbenwegsteuerung des Kolbens auf Basis einer Druckvolumenkennlinie geregelt wird, und dass
der Druckabbau in zumindest einer Hydraulikkammer (V1k, V1k1, V1k2, V2k, V3k, V4k) eines Hydraulikkreises (K1 oder K2) über Kolbenwegsteuerung der Druckvorsorgereinheit im Vor- oder Rückhub des Kolbens (1) über einen Arbeitsraum (3a, 3b) und/oder über ein oder mehrere Auslassventil (Avi, PD1, PD2) erfolgt, vorzugsweise während zumindest zeitweise gleichzeitig der zweite Arbeitsraum (3b, 3a) der Druckversorgereinheit (DE) eine weitere Hydraulikkammer (V1k, V1k1, V1k2, V2k, V3k, V4k) in einem zweiten Kreis (K2 oder K1) mit Druck beaufschlagt.

11. Verfahren nach Anspruch 10, ferner umfassend den Schritt:
- individueller oder gemeinsamer Druckaufbau mittels des Kolbens (1) in den hydraulischen Kreisen (K1, K2), wobei beim individuellen Druckaufbau in nur einem Kreis der Druck nur über einen Arbeitsraum (3,3a) des Doppelhubkolbens aufgebaut wird.

12. Verfahren nach Anspruch 10, wobei die Arbeitsräume (3a, 3b) und/oder die hydraulischen Leitungen oder die hydraulischen Kreise K1/K2 über eine Verbindungsleitung (H5) miteinander verbunden sind, wobei in der Verbindungsleitung (H5) mindestens ein Schaltventil (ShV), insbesondere mehrere parallel geschaltete Schaltventile (ShV) angeordnet ist, das Verfahren ferner umfassend die Schritte:
- wahlweises Öffnen oder Zusperren der Verbindungsleitung (H5), sodass ein Druckaufbau und/oder Druckabbau über den jeweils wirkenden Arbeitsraum (3a, 3b) anstatt im ersten hydraulischen Kreis K1 auch im zweiten hydraulischen Kreis K2 oder umgekehrt erfolgt.

13. Verfahren nach einem der Ansprüche 10 bis 12, ferner umfassend die Schritte:
- Berechnen des Druckes über den mit redundanten Stromsensoren (6b) gemessenen Phasenstrom, des Antriebs (Linearmotor, Elektromotor) und des aus der Drehmomentkonstante kt berechneten Drehmomentes der jeweils wirkenden hydraulischen Fläche der Arbeitsräume (A1, A2) unter Berücksichtigung des Schaltzustandes des Verbindungsventil (ShV), sowie, wenn vorhanden, dem Getriebewirkungsgrad;
- Heranziehen des berechneten Druckes zur Druckregelung [Anspruch 8].

14. Verfahren nach einem der Ansprüche 10 bis 13, ferner umfassend den Schritt:
- wahlweises Absperren oder Öffnen der jeweiligen Hydraulikleitung zur Druckversorgungseinrichtung (DE) mittels je eines jedem hydraulisch wirkenden Arbeitsraum (V1k, V2K, V1K1, V1K2) der Verbraucher (V1, V2, V3, V4, V5) zugeordneten Schaltventils (SV1, SV2, SV3, SV4, SV5).

15. Verfahren nach einem der Ansprüche 10 bis 14, ferner umfassend die Schritte:
- Verstellen des Kolbens (1) und/oder Öffnen mindestens eines Schaltventils (PD1, PD2, ShV, AV_{K1}, AV_{K2}) zum Druckabbau in mindestens einem Verbraucher (V1, V2, V3, V4, V5), wobei bei jeweils geöffnetem Schaltventil (PD1, PD2) sich das Hydraulikmedium zum Druckabbau in einem oder mehreren der Verbraucher (V1, V2, V3, V4, V5) über den jeweiligen Arbeitsraum (3a, 3b) oder unmittelbar über das Auslassventil (AV_{K1}, AV_{K2}) in das Vorratsbehältnis (5) entspannt bzw. abfließt. [Anspruch 10]; und/oder
- Verstellen des Kolbens (1) zum simultanen oder teilsimultanen Druckaufbau oder Druckabbau in mehreren Verbrauchern (V1, V2, V3, V4, V5) oder zum Druckaufbau in mindestens einem Verbraucher (V1, V2, V3, V4, V5) und Druckabbau in mindestens einem anderen Verbraucher (V1, V2, V3, V4, V5), wobei dabei das Schaltventil (ShV), sofern vorhanden, geschlossen ist.

## Claims

1. A pressure generating device with a piston-cylinder unit (DE), which comprises a bilaterally acting piston (1), which separates two working spaces (3a, 3b) in the cylinder from one another in a sealing manner, wherein the piston (1) has two, in particular differently large, effective surfaces (A1, A2) and each effective surface (A1, A2) of the piston (1) respectively defines a working space (A1, A2), wherein each working space (3a, 3b) is connected via a first hydraulic line (H3, H4) to a hydraulic circuit (K1, K2), wherein at least one hydraulic chamber of a consumer (V1K1, V1K2, V2K, V3K, V4K) is connected to each hydraulic circuit (K1, K2), wherein a drive (M) drives the piston (1) of the piston-cylinder unit (DE), **characterised in that**
- each working space (3a, 3b) is connected by means of a second hydraulic line (H1, H2) with a reservoir vessel (5) for a hydraulic medium, wherein in each second hydraulic line (H1, H2) a switching valve (PD1, PD2) is arranged for the optional closure or opening of the hydraulic line (H1, H2).

2. The pressure generating device according to claim 1, which is configured to build up pressure by means of the piston (1) in the hydraulic circuits (K1, K2) either individually or jointly, wherein the pressure generating device is further configured to, during individual pressure build-up in only one circuit, to build up pressure only via one working space (3, 3a) of the double-stroke piston.

3. The pressure generating device according to claim 1, **characterised in that** the effective surfaces (A1, A2) are in a ratio of 1.5:1 to 2.5:1, in particular 2:1 to one another.

4. The pressure generating device according to claim 1, **characterised in that** the working spaces(3a, 3b) and/or the hydraulic lines or the hydraulic circuits K1/K2 are connected to one another via a connecting line (H5), wherein at least one switching valve (ShV), in particular multiple parallel connected switching valves (ShV), is arranged in the connecting line (H5) for the optional opening or closing of the connecting line (H5), so that a pressure build-up and/or pressure reduction via the respectively acting working spaces (3a, 3b) also takes place in the second hydraulic circuit K2 instead of in the first hydraulic circuit K1 or vice versa.

5. The pressure generating device according to any one of the preceding claims, **characterised in that** each hydraulically acting working space (V1k, V2K, V1K1, V1K2) of the consumers (V1, V2, V3, V4, V5) is associated with a switching valve (SV1, SV2, SV3, SV4, SV5) in direct connection to the hydraulic consumer (V1, V2, V3, V4, V5) for the optional closure or opening of the respective hydraulic line to the pressure supply device (DE).

6. The pressure generating device according to any one of the preceding claims, **characterised in that** the pressure reduction in at least one consumer (V1, V2, V3, V4, V5) is carried out by means of adjustment of the piston (1) and/or by opening at least one switching valve (PD1, PD2, ShV, AV_{K1}, AV_{K2}), wherein with the respectively opened switching valve (PD1, PD2) the hydraulic medium for the pressure reduction in one or more of the consumers (V1, V2, V3, V4, V5) can be released or can flow out via the respective working space (3a, 3b) or directly via the outlet valve (AV_{K1}, AV_{K2}) into the reservoir vessel (5), wherein in a respective supply line to the respective at least one consumer (V1, V2, V3, V4, V5) a switching valve (SV1, SV2) is arranged for disconnecting the supply line between the respective working space (3a, 3b) and the at least one consumer (V1, V2, V3, V4, V5).

7. The pressure generating device according to any one of the preceding claims, which is configured in a way that by adjusting the piston (1), the pressure is increased or reduced simultaneously or partially simultaneously in several consumers (V1, V2, V3, V4, V5) or is increased in at least one consumer (V1, V2, V3, V4, V5) and is reduced in at least one other consumer (V1, V2, V3, V4, V5), wherein in this case the switching valve (ShV), if present, is closed.

8. The pressure generating device according to any one of the preceding claims, **characterised in that** the pressure supply unit supplies at least two consumers (V1, V2, V3, V4, V5) with pressure, wherein one consumer (V1, V2, V3, V4, V5) is a vehicle clutch.

9. The pressure generating device according to any one of the preceding claims, **characterised in that** the pressure supply unit supplies at least one hydraulic chamber with pressure, wherein the first two consumers (V1, V2) are in each case a chamber of a consumer (V1K, V2K, V3K, V4K, V5K) for actuating a bilaterally acting piston, in particular for actuating a steering rod.

10. A method for the optional pressure build-up and pressure reduction in at least two hydraulic chambers of one or more consumers, by means of a pressure generating device, in particular by means of a pressure generating device according to one of the preceding claims, which comprises a piston-cylinder unit (DE) that has a bilaterally acting piston (1), which separates two working spaces (3a, 3b) in the cylinder from one another in a sealing manner, wherein the piston (1) has two effective surfaces (A1, A2) and each effective surface (A1, A2) of the piston (1) respectively defines a working space (A1, A2), wherein each working space (3a, 3b) is connected via a hydraulic line (H3, H4) to a hydraulic circuit (K1, K2), wherein at least one hydraulic chamber of a consumer (V1K, V1K1, V1K2, V2K, V3K, V4K) is connected to each hydraulic circuit (K1, K2), and a drive (M) drives the piston (1) of the piston-cylinder unit (DE), **characterised in that** the pressure build-up in the hydraulic chambers is regulated via a piston path control of the piston based on a pressure-volume characteristic curve, and that the pressure reduction in at least one of the hydraulic chambers (V1k, V1k1, V1k2, V2k, V3k, V4k) of a hydraulic circuit (K1 or K2) is carried out via piston path control of the pressure supply unit in the forward stroke or reverse stroke of the piston (1) via a working space (3a, 3b) and/or via one or more outlet valves (AVi, PD1, PD2), preferably while at least temporarily at the same time the second working space (3b, 3a) of the pressure supply unit (DE) supplies a further hydraulic chamber (V1k, V1k1, V1k2, V2k, V3k, V4k) in a second circuit (K2 or K1) with pressure.

11. The method according to claim 10 further comprising the step of:
- individual or joint pressure build-up by means of the piston (1) in the hydraulic circuits (K1, K2), wherein in the case of individual pressure build-up in only one circuit, the pressure is built up only via one working space (3, 3a) of the double-stroke piston.

12. The method according to claim 10, wherein the working spaces (3a, 3b) and/or the hydraulic lines or the hydraulic circuits K1/K2 are connected to one another via a connecting line (H5), wherein at least one switching valve (ShV), in particular multiple parallel connected switching valves (ShV), is arranged in the connecting line (H5), the method further comprising:
- optionally opening or closing the connecting line (H5), so that a pressure build-up and/or pressure reduction takes place via the respective working space (3a, 3b) also takes place in the second hydraulic circuit K2 instead of in the first hydraulic circuit K1 or vice versa.

13. The method according to any one of claims 10 to 12, further comprising the steps of:
- calculating the pressure via the phase current of the drive (linear motor, electric motor) measured with redundant current sensors (6b), and the torque calculated from the torque constant kt, of the respectively acting hydraulic surface of the working spaces (A1, A2) having regard to the switching state of the connecting valve (ShV), and if available the transmissionefficiency;
- using the calculated pressure for the pressure regulation.

14. The method according to any one of claims 10 to 13, further comprising the step of:
- optionally closing or opening the respective hydraulic line to the pressure supply device (DE) by means of a switching valve (SV1, SV2, SV3, SV4, SV5) associated with each hydraulically acting working space (V1k, V2K, V1K1, V1K2) of the consumers (V1, V2, V3, V4, V5).

15. The method according to any one of claims 10 to 14 , further comprising the steps of:
- adjustment of the piston (1) and/or opening at least one switching valve (PD1, PD2, ShV, AV_{K1}, AV_{K2}) to reduce the pressure in at least one consumer (V1, V2, V3, V4, V5), wherein with the respectively opened switching valve (PD1, PD2) the hydraulic medium for the pressure reduction in one or more of the consumers (V1, V2, V3, V4, V5) is be released or flows out via the respective working space (3a, 3b) or directly via the outlet valve (AV_{K1}, AV_{K2}) into the reservoir vessel (5); and/or
- adjustment of the piston (1) for simultaneous or partially simultaneous pressure build-up or pressure reduction in several consumers (V1, V2, V3, V4, V5) or for pressure build-up in at least one consumer (V1, V2, V3, V4, V5) and for pressure reduction in at least one other consumer (V1, V2, V3, V4, V5), wherein the switching valve (ShV), if present, is closed.

## Revendications

1. Installation de génération de pression munie d'une unité de vérin (DE) qui comporte un piston à double effet (1) séparant de façon étanche deux espaces de travail (3a, 3b) dans le cylindre, dans laquelle le piston (1) présente deux surfaces d'action (A1, A2), en particulier de taille différente, et chaque surface d'action (A1, A2) du piston (1) délimite un espace de travail (A1, A2), chaque espace de travail (3a, 3b) communique par une première conduite hydraulique (H3, H4) avec un circuit hydraulique (K1, K2), au moins une chambre hydraulique d'un consommateur (V1K1, V1K2, V2K, V3K, V4K) est raccordée à chaque circuit hydraulique (K1, K2), un entraînement (M) entraîne le piston (1) de l'unité de vérin (DE), **caractérisée en ce que**
- chaque espace de travail (3a, 3b) communique au moyen d'une deuxième conduite hydraulique (H1, H2) avec un réservoir (5) d'un fluide hydraulique, une soupape de commande (PD1, PD2) étant disposée dans chaque deuxième conduite hydraulique (H1, H2) pour fermer ou ouvrir sélectivement la conduite hydraulique (H1, H2).

2. Installation de génération de pression selon la revendication 1, configurée de façon à constituer une pression au moyen du piston (1) dans les circuits hydrauliques (K1, K2), soit individuellement soit ensemble, l'installation de génération de pression étant en outre configurée de façon à constituer la pression dans un seul espace de travail (3a, 3b) du piston à double effet lors de la génération individuelle de pression dans un seul circuit.

3. Installation de génération de pression selon la revendication 1, **caractérisée en ce que** le rapport entre les surfaces d'action (A1, A2) est de 1,5 pour 1 à 2,5 pour 1, en particulier de 2 pour 1.

4. Installation de génération de pression selon la revendication 1, **caractérisée en ce que** les espaces de travail (3a, 3b) et/ou les conduites hydrauliques ou les circuits hydrauliques K1/K2 communiquent entre eux par une conduite de communication (H5), laquelle conduite de communication (H5) contient au moins une soupape de commande (ShV), en particulier plusieurs soupapes de commande (ShV) montées en parallèle, pour ouvrir ou fermer sélectivement la conduite de communication (H5) de façon à obtenir une constitution de pression et/ou une réduction de pression via l'espace de travail (3a, 3b) actif dans le deuxième circuit hydraulique K2 aussi au lieu du premier circuit hydraulique K1 ou vice versa.

5. Installation de génération de pression selon l'une des revendications précédentes, **caractérisée en ce que** chaque espace de travail hydraulique (V1k, V2K, V1K1, V1K2) des consommateurs (V1, V2, V3, V4, V5) est associé à une soupape de commande (SV1, SV2, SV3, SV4, SV5) qui communique directement avec le consommateur hydraulique (V1, V2, V3, V4, V5) pour fermer ou ouvrir sélectivement la conduite hydraulique correspondante vers l'installation de fourniture de pression (DE).

6. Installation de génération de pression selon l'une des revendications précédentes, **caractérisée en ce que** la constitution de pression dans au moins un consommateur (V1, V2, V3, V4, V5) est effectuée au moyen du déplacement du piston (1) et/ou par l'ouverture d'au moins une soupape de commande (PD1, PD2, ShV, AV_{K1}, AV_{K2}), le fluide hydraulique étant détendu ou s'écoulant dans le réservoir (5) via l'espace de travail (3a, 3b) correspondant ou directement via la soupape de détente (AV_{K1}, AV_{K2}) quand la soupape de commande (PD1, PD2) correspondante est ouverte pour réduire la pression dans un ou plusieurs des consommateurs (V1, V2, V3, V4, V5), une soupape de commande (SV1, SV2) étant disposée dans une conduite d'arrivée correspondante vers l'au moins un consommateur (V1, V2, V3, V4, V5) correspondant pour couper la conduite d'arrivée entre l'espace de travail (3a, 3b) correspondant et l'au moins un consommateur (V1, V2, V3, V4, V5).

7. Installation de génération de pression selon l'une des revendications précédentes, configurée pour constituer ou réduire la pression de façon simultanée ou partiellement simultanée dans plusieurs consommateurs (V1, V2, V3, V4, V5) au moyen du déplacement du piston (1) ou pour constituer la pression dans au moins un consommateur (V1, V2, V3, V4, V5) et la réduire dans au moins un autre consommateur (V1, V2, V3, V4, V5), la soupape de commande (ShV), si elle existe, étant alors fermée.

8. Installation de génération de pression selon l'une des revendications précédentes, **caractérisée en ce que** l'installation de fourniture de pression alimente au moins deux consommateurs (V1, V2, V3, V4, V5) en pression, un consommateur (V1, V2, V3, V4, V5) étant un embrayage de véhicule.

9. Installation de génération de pression selon l'une des revendications précédentes, **caractérisée en ce que** l'installation de fourniture de pression alimente au moins des chambres hydrauliques en pression, les deux premiers consommateurs (V1, V2) étant chacun une chambre d'un consommateur (V1K, V2K, V3K, V4K, V5K) pour l'actionnement d'un piston à double effet, en particulier pour l'actionnement d'une bielle de direction.

10. Procédé pour la constitution et la réduction sélectives de pression dans au moins deux chambres hydrauliques d'un ou plusieurs consommateurs (V1, V2, V3, V4, V5) au moyen d'une installation de génération de pression, en particulier au moyen d'une installation de génération de pression selon l'une des revendications précédentes munie d'une unité de vérin (DE) qui comporte un piston à double effet (1) séparant de façon étanche deux espaces de travail (3a, 3b) dans le cylindre, dans laquelle le piston (1) présente deux surfaces d'action (A1, A2) et chaque surface d'action (A1, A2) du piston (1) délimite un espace de travail (A1, A2), dans laquelle chaque espace de travail (3a, 3b) communique par une conduite hydraulique (H3, H4) avec un circuit hydraulique (K1, K2), dans laquelle au moins une chambre hydraulique d'un consommateur (V1K, V1K1, V1K2, V2K, V3K, V4K) est raccordée à chaque circuit hydraulique (K1, K2) et un entraînement (M) entraîne le piston (1) de l'unité de vérin (DE), **caractérisé en ce que** la constitution de la pression dans les chambres hydrauliques est régulée par un contrôle de la course du piston sur la base d'une courbe caractéristique pression-volume, et
**en ce que** la réduction de la pression dans au moins une chambre hydraulique (V1k, V1k1, V1k1, V2k, V1k2, V2k, V3k, V4k) d'un circuit hydraulique (K1 ou K2) est effectuée à l'aide du contrôle de la course du piston de l'unité d'alimentation en pression pendant la course aller et retour du piston (1) via un espace de travail (3a, 3b) et/ou via une ou plusieurs soupapes de détente (Avi, PD1, PD2), de préférence pendant ou au moins en même temps que le deuxième espace de travail (3b, 3a) de l'installation de fourniture de pression (DE) fournit de la pression à une autre chambre hydraulique (V1k, V1k1, V1k2, V2k, V3k, V4k) dans un deuxième circuit (K2 ou K1).

11. Procédé selon la revendication 10, comprenant en outre l'étape de constitution individuelle ou conjointe de la pression au moyen du piston (1) dans les circuits hydrauliques (K1, K2), la pression n'étant constituée que dans un seul circuit via un espace de travail (3, 3a) du piston à double effet lors de la constitution de la pression individuelle.

12. Procédé selon la revendication 10, dans lequel les espaces de travail (3a, 3b) et/ou les conduites hydrauliques ou les circuits hydrauliques K1/K2 communiquent les uns avec les autres via une conduite de communication (H5), la conduite de communication (H5) contenant au moins une soupape de commande (ShV), en particulier plusieurs soupapes de commande (ShV) montées en parallèle, lequel procédé comprend en outre les étapes d'ouverture ou fermeture sélective de la conduite de communication (H5), de sorte qu'une constitution de la pression et/ou une réduction de la pression sont réalisées via l'espace de travail (3a, 3b) actif dans le deuxième circuit hydraulique (K2) aussi au lieu du premier circuit hydraulique (K1) ou vice versa.

13. Procédé selon l'une des revendications 10 à 12, comprenant en outre les étapes de :
- calcul de la pression via le courant de phase de l'entraînement (moteur linéaire, moteur électrique) mesuré avec des capteurs de courant (6b) redondants et du couple de rotation calculé à partir de la constante de couple de rotation kt de la surface hydraulique active des espaces de travail (A1, A2), compte tenu de l'état de commutation de la soupape de communication (ShV) et, s'il existe, du rendement de la transmission ;
- utilisation de la pression calculée pour la régulation de la pression [revendication 8].

14. Procédé selon l'une des revendications 10 à 13, comprenant en outre l'étape de fermeture ou d'ouverture sélective de la conduite hydraulique correspondante vers l'installation de génération de pression (DE) au moyen d'une soupape de commande (SV1, SV2, SV3, SV4, SV5) associée à chaque espace de travail hydraulique (V1k, V2K, V1K1, V1K2) des consommateurs (V1, V2, V3, V4, V5).

15. Procédé selon l'une des revendications 10 à 14, comprenant en outre les étapes de :
- déplacement du piston (1) et/ou ouverture d'au moins une soupape de commande (PD1, PD2, ShV, AV_{K1}, AV_{K2}) pour réduire la pression dans au moins un consommateur (V1, V2, V3, V4, V5), le fluide hydraulique étant détendu ou s'écoulant dans le réservoir (5) via l'espace de travail (3a, 3b) correspondant ou directement via la soupape de détente (AV_{K1}, AV_{K2}) quand la soupape de commande (PD1, PD2) correspondante est ouverte pour réduire la pression dans un ou plusieurs des consommateurs (V1, V2, V3, V4, V5) [revendication 10] et/ou
- déplacement du piston (1) pour constituer la pression ou réduire la pression de façon simultanée ou partiellement simultanée dans plusieurs consommateurs (V1, V2, V3, V4, V5) ou pour constituer la pression dans au moins un consommateur (V1, V2, V3, V4, V5) et la réduire dans au moins un autre consommateur (V1, V2, V3, V4, V5), la soupape de commande (ShV), si elle existe, étant alors fermée.
